Europäisches Patentamt

European Patent Office

Office européen des brevets

(19)

(11) Veröffentlichungsnummer: **0 017 263**
**A1**

(12) **EUROPÄISCHE PATENTANMELDUNG**

(21) Anmeldenummer: **80200126.3**

(22) Anmeldetag: **14.02.80**

(51) Int. Cl.³: **B 60 P 3/32**
**B 62 D 29/00**

(30) Priorität: **05.04.79 DE 7909878 U**

(43) Veröffentlichungstag der Anmeldung:
**15.10.80 Patentblatt 80/21**

(84) Benannte Vertragsstaaten:
**AT BE CH FR IT NL SE**

(71) Anmelder: **Joseph Weippert Wohnwagenwerk**
**Theodor-Heuss-Strasse 66**
**D-4100 Duisburg 11(DE)**

(72) Erfinder: **Weippert, Josef**
**Theodor-Heuss-Strasse 66**
**D-4100 Duisburg 11(DE)**

(74) Vertreter: **Ackmann, Günther, Dr.-Ing.**
**Claubergstrasse 24**
**D-4100 Duisburg 1(DE)**

(54) **Wohnwagenanhänger für Kraftfahrzeuge.**

(57) Um einen Wohnwagenanhänger, der aus einem Holzrahmenaufbau (7) mit einer Ausfachung aus geschäumten Polystyrolplatten (8) und auf die Außen- und Innenflächen aufgeklebten Sperrholzplatten (9,10) aufgebaut ist, ohne Gewichtserhöhung mit einer Außenverkleidung in der Art von Profilbrettern zu versehen und ihm das Aussehen eines Holzhauses zu geben, sind die äußeren Sperrholzplatten (10) der Wandteile (5) an ihrer Außenfläche mit in der Art von gefügten Profilbrettern parallel verlaufenden Nuten (11) versehen.

Fig.2

EP 0 017 263 A1

Croydon Printing Company Ltd.

12.02.1980
(22.1457/We)

- 1 -

Joseph Weippert Wohnwagenwerk
Theodor-Heuss-Straße 66, 4100 Duisburg 11

Wohnwagenanhänger für Kraftfahrzeuge

Die Erfindung betrifft einen Wohnwagenanhänger für Kraftfahrzeuge, der aus einem ein- oder zweiachsigen Fahrzeugrahmen und einem Holzrahmenaufbau mit einer Ausfachung aus geschäumten Polystyrolplatten und auf die Außen- und Innenflächen aufgeklebten Sperrholzplatten besteht.

Bei Wohnwagenanhängern für Kraftfahrzeuge soll der auf den Fahrzeugrahmen und die Karosserie entfallende Gewichtsanteil möglichst gering sein, um die Zugbelastung niedrig zu halten und im Hinblick auf das zulässige Gesamtgewicht für die Wohnwageninneneinrichtungen (Mobiliar, Kücheneinrichtungen, Sanitäreinrichtungen, Gepäck u. dgl.) einen größtmöglichen Spielraum zu haben. Der Wohnwagenaufbau soll weiterhin eine ausreichende Festigkeit aufweisen, witterungsbeständig sein und eine ausreichende Wärmeisolierung gewährleisten. Hierfür wird, im Gegensatz zum allgemeinen Kraftfahrzeugbau, der Wohnwagenaufbau und insbesondere der Aufbau der Wandteile als Holzrahmenbau erstellt, der auf einem Fahrzeugrahmen befestigt ist. Bei einer bekannten Ausführung dieser Art werden die Ausfachungen des Holzrahmens mit Glaswolle oder geschäumten Polystyrolplatten gefüllt und am Holzrahmen an der Innenseite Sperrholzplatten und auf der Außenseite Aluminiumbleche befestigt, wobei diese Verbundwandplatten eine Dicke von etwa 15 - 40 mm haben. Bei einer anderen bekannten Ausführung besteht auch die Außenhaut aus Sperrholzplatten; die Sperrholzplatten von Außen- und Innenhaut sind mit dem Holzrahmen und den geschäumten Polystyrolplatten sandwichartig unter Druck verleimt.

Andererseits sind sogenannte Mobilheime bekannt, welche mit ihren Abmessungen über den für den Straßenverkehr zulässigen Abmessungen liegen und daher nur mit Hilfe eines Lastkraftfahrzeuges oder eines Tiefladers transportierbar sind. Da bei den Mobilheimen auch für das Gesamtgewicht keine engen Grenzen gesetzt sind, werden diese in der Regel aus wesentlich massiveren Bauteilen errichtet, wobei die Wandteile auf ihrer Außenfläche häufig mit massiven Profilbrettern verkleidet sind, welche dem Mobilheim das Aussehen eines Holzhauses geben. Wegen des hohen Gewichts der Profilbretter ist eine entsprechende Verkleidung von Wohnwagenanhängern, welche den für den Straßenverkehr erlassenen Bestimmungen entsprechen, nicht möglich.

Demgegenüber liegt der Erfindung die Aufgabe zugrunde, einen Wohnwagenanhänger der gattungsgemäßen Art ohne Gewichtserhöhung mit einer Außenverkleidung in der Art von Profilbrettern zu versehen.

Diese Aufgabe wird erfindungsgemäß dadurch gelöst, daß die äußeren Sperrholzplatten der Wandteile an ihrer Außenfläche mit in der Art von gefügten Profilbrettern parallel verlaufenden Nuten versehen sind.

Diese Ausbildung hat den wesentlichen Vorteil, daß der Wohnwagenanhänger durch die entsprechende Ausgestaltung der Sperrholzplatten das Aussehen eines Holzhauses hat, welches mit Profilbrettern verkleidet ist. Da jedoch hierfür keine massiven Profilbretter vorhanden sind, sondern lediglich die sowieso vorgesehene Sperrholzplatte mit einer entsprechenden Oberflächengestaltung versehen ist, wird das Gesamtgewicht des Wohnwagenanhängers hierdurch nicht erhöht, sondern sogar, wenn auch geringfügig, erniedrigt.

Ebenso wie zur Verkleidung von Holzhäusern verschieden breite Profilbretter bekannt sind, kann auch erfindungsgemäß ein entsprechend verschiedenartiger Eindruck erzielt werden, indem die Nuten vertikal mit einem Abstand von 5 - 20 cm angeordnet sind. Dabei können auch die Nuten in ihrer Breite von etwa 5 - 15 mm variiert werden. Durch eine Auswahl bestimmter Abstände der Nuten und deren Breite läßt sich also ohne weiteres ein gewünschtes Aussehen erzielen.

Die äußere Sperrholzplatte hat vorzugsweise eine Stärke von etwa 5 - 10 mm und die darin eingearbeiteten Nuten besitzen eine Tiefe von etwa 2 - 5 mm. Wenngleich die Sperrholzplatte aus verschiedenartigen Hölzern bestehen kann, werden erfindungsgemäß vorzugsweise Sperrholzplatten aus Kiefern- oder Tannenholz verwendet.

Der Gegenstand der Erfindung ist in der Zeichnung anhand eines Ausführungsbeispieles näher dargestellt; es zeigt:

Fig. 1    einen Wohnwagenanhänger in einer perspektivischen Darstellung und

Fig. 2    ein Wandteil des Gegenstandes der Fig. 1 in einem größeren Maßstab und als Abschnitt.

Der Wohnwagenanhänger 1 besteht in bekannter Weise aus einem Fahrzeugrahmen 2, auf dem eine Karosserie 3 befestigt ist. Diese Karosserie 3 besteht aus einer Bodenplatte 4, den vier Wandteilen 5 und einem Dach 6, welches beim Ausführungsbeispiel sattelförmig ausgebildet ist. Die Wandteile 5 werden in üblicher Weise vorgefertigt und zusammenmontiert. Sie sind mit Fenstern und einer oder mehreren Türen versehen.

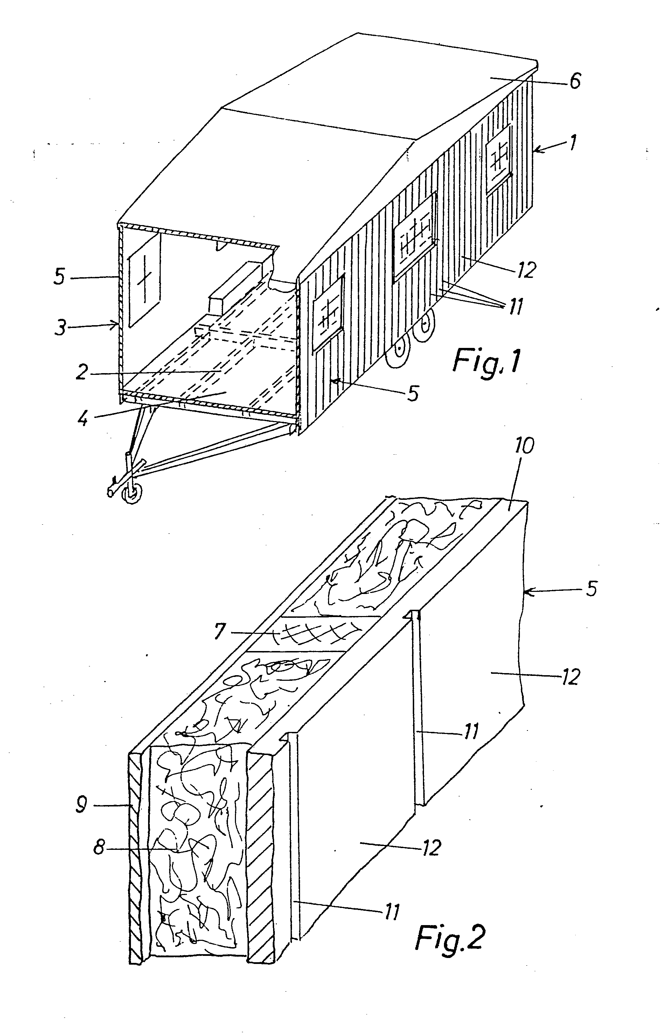

Der Aufbau der Wandteile 5 ergibt sich aus Fig. 2. Danach besteht jedes Wandteil aus einem Holzrahmen 7, von dem in der Zeichnung nur ein Pfosten gezeigt ist, und Polystyrolplatten, welche zwischen den durch den Holzrahmen 7 gebildeten Ausfachungen einliegen. Auf der Innenseite ist auf dem Holzrahmen 7 eine Sperrholzplatte 9 angebracht. Weiterhin ist erfindungsgemäß eine äußere Sperrholzplatte 10 vorgesehen, in welche vertikale Nuten 11 eingearbeitet sind. Hat beispielsweise die Sperrholzplatte 10 eine Stärke von 8 mm, so kann die Tiefe der Nuten 11  3 mm betragen. Der Abstand der vertikalen Nuten kann verschiedenartig sein und liegt vorzugsweise zwischen 5 und 20 cm. Durch diese Nuten erhält die äußere Sperrholzplatte 10 das Aussehen von gefügten Profilbrettern 12. Fig. 1 vermittelt diesen Eindruck an dem Wandteil 5, welcher sich auf der linken Fahrzeugseite befindet.

Die inneren und äußeren Sperrholzplatten 9 bzw. 10 sind in an sich bekannter Weise sandwichartig unter Druck mit dem Holzrahmen 7 und den darin einliegenden Polystyrolplatten 8 verklebt. Weiterhin ist die äußere Sperrholzplatte in bekannter Weise mit einem Holzschutzmittel und gegen die Einwirkung von Regen und Nässe
imprägniert. Es handelt sich hierbei um übliche Holzschutzmittel. Die Sperrholzplatten 10 bestehen vorzugsweise aus Kiefern- oder Tannenholz. Wesentlich ist
hierbei, daß die Außenschicht dieser Sperrholzplatten
10 aus dem Holz besteht, welches den Eindruck von Profilbrettern 12 ergeben soll.

Die Erfindung bleibt nicht auf das Ausführungsbeispiel
beschränkt, sondern es sind zahlreiche Änderungen durchführbar. So besteht beispielsweise die Möglichkeit, die
Nuten 11 auch horizontal anzubringen. Weiterhin ist es
möglich, den Abstand und die Breite der Nuten sowie die
Nutentiefe zu variieren, und zwar in Abhängigkeit von
dem gewünschten Eindruck, der erzielt werden soll.
Weiterhin können anstelle von Sperrholzplatten auch
Platten aus anderen holzähnlichen Werkstoffen, einschließlich Kunststoffen verwendet werden.

12.02.1980

- 1 -

(22.1457/We)

## Patentansprüche

1. Wohnwagenanhänger für Kraftfahrzeuge, bestehend aus einem ein- oder zweiachsigen Fahrzeugrahmen und einem Holzrahmenaufbau mit einer Ausfachung aus geschäumten Polystyrolplatten und auf die Außen- und Innenflächen aufgeklebten Sperrholzplatten, dadurch gekennzeichnet, daß die äußeren Sperrholzplatten (10) der Wandteile (5) an ihrer Außenfläche mit in der Art von gefügten Profilbrettern parallel verlaufenden Nuten (11) versehen sind.

2. Wohnwagenanhänger nach Anspruch 1, dadurch gekennzeichnet, daß die Nuten (11) vertikal mit einem Abstand von etwa 5 bis 20 cm angeordnet sind.

3. Wohnwagenanhänger nach Anspruch 1 oder 2, dadurch gekennzeichnet, daß die Nuten (11) eine Breite von etwa 5 bis 15 mm haben.

- 2 -

4. Wohnwagenanhänger nach einem der Ansprüche 1 bis 3, dadurch gekennzeichnet, daß die äußere Sperrholzplatte (10) eine Stärke von etwa 5 bis 10 mm hat und die Nuten (11) eine Tiefe von etwa 2 bis 5 mm haben.

5. Wohnwagenanhänger nach einem der Ansprüche 1 bis 4, dadurch gekennzeichnet, daß die Sperrholzplatte (10) aus Kiefern- oder Tannenholz besteht.

0017263

Fig.1

Fig.2

Europäisches
Patentamt

**EUROPÄISCHER RECHERCHENBERICHT**

Nummer der Anmeldung

EP 80 20 0126

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | DE - U1 - 7 809 036 (SCHUMACHER) <br><br> * Ansprüche 6 und 8; Seite 10; Seite 14, Zeilen 17, 18; Fig. 1, 2 * <br><br> -- | 1,2, 4 | B 60 P 3/32 <br> B 62 D 29/00 |
| A | DE - U - 1 744 692 (AUTO UNION) <br><br> ---- | | |

RECHERCHIERTE SACHGEBIETE (Int. Cl.3)

B 60 P 3/00
B 62 D 29/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 29-05-1980 | LUDWIG |

EPA form 1503.1 06.78